# EUROPEAN PATENT APPLICATION

(11) **EP 4 180 702 A1**
(43) Date of publication of application: **17.05.2023**
(21) Application number: 21841746.7
(22) Date of filing: 13.07.2021
(51) Int. Cl.: F16K 31/06, F16K 37/00, H02J 7/00, H02J 7/35, H04Q 9/00, H02S 40/38

(54) **INDUSTRIAL RECHARGEABLE WIRELESS SOLENOID VALVE SYSTEM**

(30) Priority: 13.07.2020 KR 20200085867
(71) Applicant: Sun HST Co., Ltd., Ulsan 44495 (KR)
(72) Inventor: LEE, Jin Yong, Ulsan 44409 (KR)
(74) Representative: Frenkel, Matthias Alexander
(86) International application number: PCT/KR2021/008934
(87) International publication number: WO 2022/015001

(57) **Abstract**

An embodiment of the present disclosure relates to an industrial rechargeable wireless solenoid valve system, and a technical problem to be solved is to provide an industrial rechargeable wireless solenoid valve system which is controlled by a wireless control signal and receives power supplied from a rechargeable battery. To this end, the present disclosure provides an industrial rechargeable wireless solenoid valve system comprising: a wireless communication unit for receiving a command from a factory control unit; a solenoid valve control unit which receives input of the command from the wireless communication unit to output an operation signal corresponding to the command; an output unit which receives input of the operation signal from the solenoid valve control unit to drive a solenoid valve; and a power supply unit for supplying power to the wireless communication unit, the solenoid valve control unit, and the output unit, respectively.

## Description

### TECHNICAL FIELD

An embodiment of the present disclosure relates to an industrial rechargeable wireless solenoid valve.

### DISCUSSION OF RELATED ART

Wired solenoid valves, often used in automobile production lines and industrial automation lines, are used to control the movement of various machines and driving devices using air pressure.

Therefore, wired solenoid valves are used in various fields. A single wired solenoid valve has 2 to 3 wires. If there are 10 solenoid valves, 20 to 30 wires should be wired and connected individually, and if there are 100 solenoid valves, 200 to 300 wires should be wired and connected one by one.

Therefore, the process incurs the cost of the wires required for wiring, and a lot of work time is consumed to connect the wires individually. Further, it is difficult to diagnose the problem after installation. It takes much time to determine where and how a certain wire is shorted among numerous wires.

The above-described information disclosed in the background technology of the present disclosure is only for improving the understanding of the background of the present disclosure and thus may include information that does not constitute the prior art.

### SUMMARY

A to-be-addressed issue according to an embodiment of the present disclosure is to provide an industrial rechargeable wireless solenoid valve system that is controlled by a wireless control signal and supplied with power from a rechargeable battery.

A to-be-addressed issue according to an embodiment of the present disclosure is to provide an industrial rechargeable wireless solenoid valve system that does not require wiring using wireless communication, thereby reducing material costs and saving wiring work time.

A to-be-addressed issue according to an embodiment of the present disclosure is to provide an industrial rechargeable wireless solenoid valve system that may diagnose a failure by checking the output state of the current solenoid valve.

Another to-be-addressed issue according to an embodiment of the present disclosure is to provide an industrial rechargeable wireless solenoid valve system that provides time information for the initial uplink transmission to the wireless transceiver of the factory control unit before the wireless solenoid valve starts the uplink transmission for smooth wireless signal transmission and reception within the cycle time in the factory automation system, thereby allowing the factory control unit to properly configure uplink resources in consideration of this.

The industrial rechargeable wireless solenoid valve system according to an embodiment of the present disclosure may comprise a wireless communication unit for receiving a command from the factory control unit; a solenoid valve control unit for receiving the command from the wireless communication unit and outputting an operation signal corresponding to the command; an output unit for receiving the operation signal from the solenoid valve control unit and driving the solenoid valve; and a power supply unit for supplying power to the wireless communication unit, the solenoid valve control unit, and the output unit, respectively.

The solenoid valve control unit may respond to a factory control unit through a wireless communication unit for an output state of the solenoid valve by the output unit.

The system may further comprise a rechargeable battery for supplying DC power to the power supply unit, wherein the battery is charged by a solar power module or an external DC power supply device.

The system may further comprise an external DC power supply device for supplying DC power to the power supply unit.

The factory control unit and the wireless communication unit may include a 2.4GHz Wi-Fi communication module, a Zigbee communication module.

The industrial rechargeable wireless solenoid valve system may perform steps of: transmitting, by the solenoid valve control unit, time information to start the initial transmission of periodic uplink transmission by the solenoid valve control unit to the factory control unit; receiving, by the solenoid valve control unit, a configuration indicating periodic uplink resource assignment from the factory control unit; transmitting, by the solenoid valve control unit, the periodic uplink to the factory control unit based on the periodic uplink resource assignment; and transmitting a solenoid valve failure signal to a factory network when the response signal received by the factory control unit from the solenoid valve control unit is inconsistent with the command transmitted by the factory control unit to the solenoid valve control unit or the response signal is not received.

The present disclosure provides an industrial rechargeable wireless solenoid valve system that is controlled by a wireless control signal and supplied with power from a rechargeable battery.

The present disclosure provides an industrial rechargeable wireless solenoid valve system that does not require wiring using wireless communication, thereby reducing material costs and saving wiring work time.

The present disclosure provides an industrial rechargeable wireless solenoid valve system that may diagnose a failure by checking the output state of the current solenoid valve.

The present disclosure provides an industrial rechargeable wireless solenoid valve system that provides time information for the first start of uplink transmission to the wireless transceiver of the factory control unit before the wireless solenoid valve starts the uplink transmission for smooth wireless signal transmission and reception within the cycle time in the factory automation system, thereby allowing the factory control unit to properly configure uplink resources in consideration of this.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
FIG. 1 is a block diagram illustrating a partial configuration of an industrial rechargeable wireless solenoid valve system according to an embodiment of the present disclosure;
FIGS. 2 and 3 are views illustrating a partial configuration of an industrial rechargeable wireless solenoid valve system according to an embodiment of the present disclosure;
FIG. 4 is a view showing a solenoid valve in the industrial rechargeable wireless solenoid valve system according to an embodiment of the present disclosure;
FIGS. 5 and 6 are views showing the operation of the solenoid valve in the industrial rechargeable wireless solenoid valve system according to an embodiment of the present disclosure
FIG. 7 is a block diagram showing the configuration of an industrial rechargeable wireless solenoid valve system according to an embodiment of the present disclosure;
FIG. 8 is a view illustrating a wireless signal transmission/reception and cycle period between a solenoid valvecontrolunit, a factory control unit, and a factory network in an industrial rechargeable wireless solenoid valve system according to an embodiment of the present disclosure; and
FIG. 9 is a flowchart illustrating an operating method of an industrial rechargeable wireless solenoid valve system according to an embodiment of the present disclosure.

### DETAILED DESCRIPTION OF EXEMPLARY EMBODIMENTS

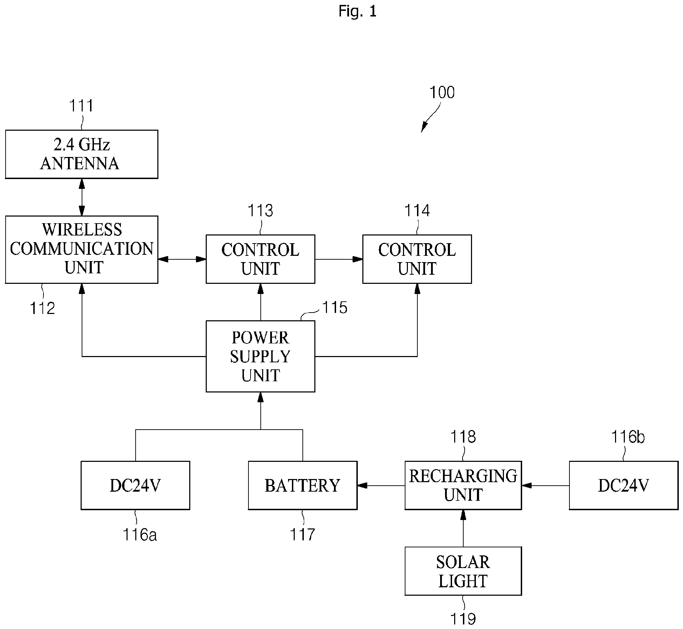

FIG. 1 is a block diagram illustrating a partial configuration of an industrial rechargeable wireless solenoid valve system 100 according to an embodiment of the present disclosure.

As shown in FIG. 1, the industrial rechargeable wireless solenoid valve system 100, according to an embodiment of the present disclosure, may comprise a wireless communication unit 112, a solenoid valve control unit 113, an output unit 114, and a power supply unit 115. For some examples, the wireless communication unit 112 may transmit and receive a wireless signal through an antenna 111. In some examples, the industrial rechargeable wireless solenoid valve system 100 may further comprise a rechargeable battery 117 and/or an external direct current power supply device 116a. Further, the battery 117 may include a solar power module 119 and/or an external DC power supply device 116b connected through a charging unit 118. The wireless communication unit 112 may receive a command from the factory control unit 200 through the antenna 111 and transmit it to the solenoid valve control unit 113 or receive a response signal from the solenoid valve control unit 113 and transmit it to the factory control unit 200 through the antenna 111.

The solenoid valve control unit 113 may receive a command from the wireless communication unit 112 and output an operation signal corresponding to a command to the output unit 114. In some examples, the operation signal may be a signal that moves the solenoid valve 120 to the left or the right.

The output unit 114 may receive an operation signal from the solenoid valve control unit 113 to actually drive the solenoid valve 120. For some examples, the output unit 114 allows the solenoid valve 120 to move to the left or to the solenoid valve 120 to move to the right.

The power supply unit 115 may supply DC power to the wireless communication unit 112, the solenoid valve control unit 113, and the output unit 114, respectively.

The power supply unit 115 may receive power from the external DC power supply device 116a and/or the rechargeable battery 117. Further, the rechargeable battery 117 may be charged through the charging unit 118 from the solar power module 119 and/or the external DC power supply device 116b.

Meanwhile, the wireless communication unit 210 of the factory control unit 200 and the wireless communication unit 112 of the solenoid valve control unit 113, respectively, may include a 2.4 GHz band Wi-Fi communication module and/or a ZigBee communication module.

Further, the solenoid valve control unit 113 may respond to the output state of the solenoid valve 120 by the output unit 114 to the factory control unit 200 through the wireless communication unit 112.

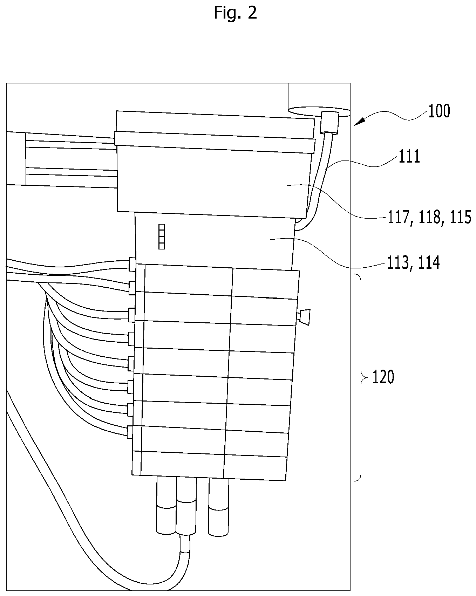

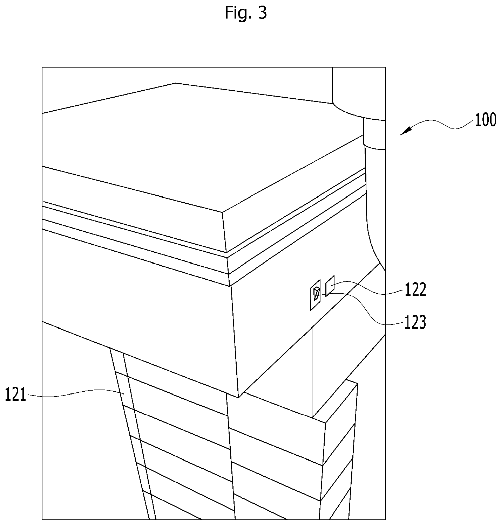

FIGS. 2 and 3 are views illustrating a partial configuration of an industrial rechargeable wireless solenoid valve system 100 according to an embodiment of the present disclosure.

As shown in FIG. 2, the industrial rechargeable wireless solenoid valve system 100, according to an embodiment of the present disclosure, is installed with an antenna 111, a battery 117, a charging unit 118, a power supply unit 115, a solenoid valve control unit 113, an output unit 114, and a solenoid valve 120 from top to bottom. Further, as shown in FIG. 3, the industrial rechargeable wireless solenoid valve system 100, according to an embodiment of the present disclosure, may comprise an on/off switch 121 on one side, an external DC power terminal 122, and a battery charging terminal 123.

In this way, the present disclosure provides an industrial rechargeable wireless solenoid valve system 100 controlled by a wireless control signal and powered by a rechargeable battery. Further, the present disclosure provides an industrial rechargeable wireless solenoid valve system 100 that does not require wiring using wireless communication, thereby reducing material costs and saving wiring work time.

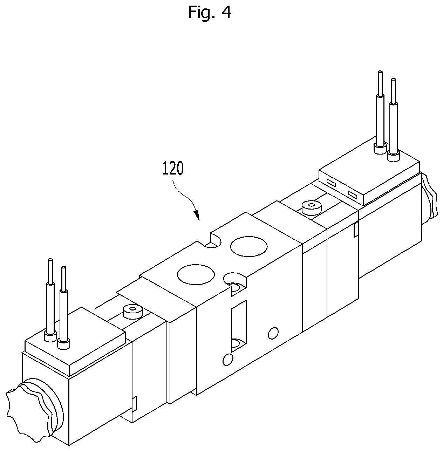

FIG. 4 is a view showing the solenoid valve 120 in the industrial rechargeable wireless solenoid valve system 100 according to an embodiment of the present disclosure.

As shown in FIG. 4, as an example, the double-acting solenoid valve 120 may include two coils (the part from which the electric wires are protruded). When a control signal is applied to the wire on the left in the drawing, the solenoid valve 120 internally moves to the left, and on the contrary, when a control signal is applied to the wire on the right, the solenoid valve 120 internally moves to the right.

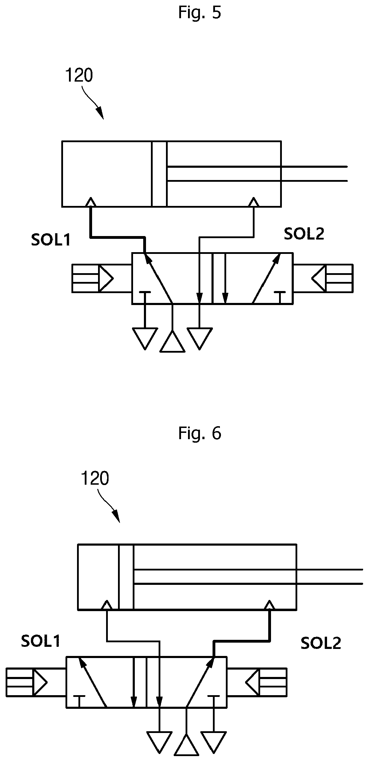

FIGS. 5 and 6 are views showing the operation of the solenoid valve 120 in the industrial rechargeable wireless solenoid valve system 100 according to an embodiment of the present disclosure.

As shown in FIGS. 5 and 6, portions marked "SOL1" and "SOL2" may be the above-described coils. Further, a portion indicated by a triangle may be, for example, a direction in which air pressure enters and exits. Among the white triangles, the central triangle is the part that receives air pressure from the compressor, and the remaining white triangles are the parts where the air pressure is released.

In the case of FIG. 5, when a control signal is applied to SOL2, the solenoid valve 120 moves to the right, air pressure enters the rear part of the cylinder, and the air pressure in the front part is released. Thus, the cylinder moves forward.

Conversely, in the case of FIG. 6, when a control signal is applied to SOL1, the solenoid valve 120 moves to the left, and air pressure enters the front part of the cylinder. The air pressure in the rear part is released, and the cylinder moves backward.

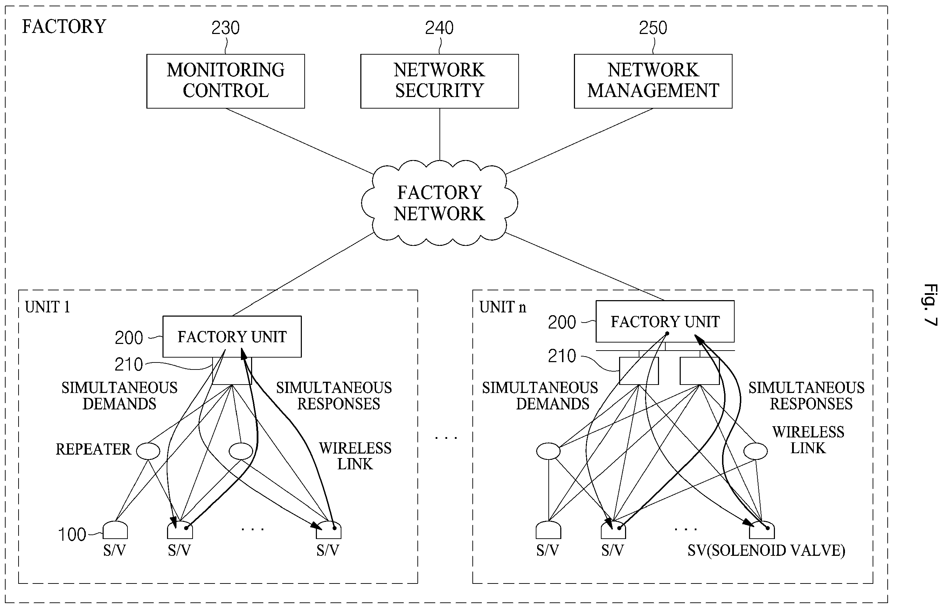

FIG. 7 is a block diagram showing the configuration of an industrial rechargeable wireless solenoid valve system 100, according to an embodiment of the present disclosure.

As shown in FIG. 7, the industrial rechargeable wireless solenoid valve system 100 according to an embodiment of the present disclosure may be provided with multiple wireless solenoid valves 120 having the configuration as described above in the factory, and multiple wireless solenoid valves 120 may be defined as one unit. Further, such units may be provided in multiple quantities.

In some examples, multiple wireless solenoid valves 120 may be wirelessly coupled to factory control 200. For this, the factory control unit 200 may include a wireless communication unit 210, and the wireless communication unit 210 may be connected to the wireless solenoid valves 120 through a repeater.

For some examples, each unit may include a factory control unit 200 with a wireless communication unit 210 and a repeater. Further, each factory control unit 200 may be connected to the factory network 220 by wire or wireless, and the factory network 220 may be connected to a monitoring control unit 230, a network security unit 240, and/or a network management unit 250 by wire or wireless.

Under this configuration, the factory control unit 200 periodically transmits a command to the wireless solenoid valve (i.e., the solenoid valve control unit 113) of one unit that returns a response per cycle time.

Here, the cycle time is usually 2 ms to 20 ms to set the waiting time limit (1 ms to 10 ms), and the transmission must be made within this cycle time. Further, under this configuration, the factory control unit 200 requests the solenoid valve control unit 113 to operate, and accordingly, the solenoid valve control unit 113 responds, that is, returns the operation information.

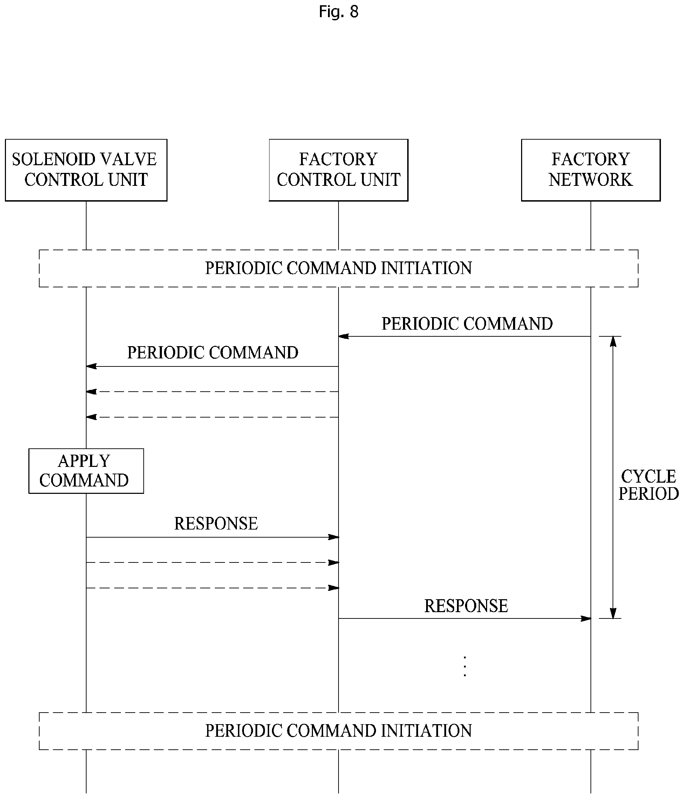

After the wireless solenoid valves of one unit complete initial connection and registration and successfully receive the necessary parameters, the factory control unit 200 of the factory network 220 periodically transmits a broadcast, multicast, or unicast command to the wireless solenoid valve control unit 113 of one unit. This wireless solenoid valve control unit 113 returns a response (e.g., driving or acknowledgment) within one cycle time. The probability that the cycle time may not be met should be <10⁻⁹. Further, the solenoid valve control unit 113 should simultaneously apply the received command at the same cycle time (jitter < 10us). FIG. 8 is a view illustrating a wireless signal transmission/reception and cycle period between a solenoid valve control unit 113, a factory control unit 200, and a factory network 220 in an industrial rechargeable wireless solenoid valve system 100 according to an embodiment of the present disclosure.

As shown in FIG. 8, after performing the registration steps for the factory network 220, the start/stop of the periodic command is performed.
- Periodic command transmission: The solenoid valve control unit 113 of one unit must certainly receive a command from the factory control unit 200 based on the received parameters. The other solenoid valve control unit 113 does not need to receive or wake up. A diversity technique (e.g., hybrid automatic repeat request (HARQ) retransmissions) may be applied to transmissions. For example, the HARQ retransmission may be performed when the wireless communication unit 210 of the factory control unit 200 receives a certain HARQ NACK (negative acknowledgment). Only the solenoid valve control unit 113 that has not successfully received the command needs to receive the retransmission.
- Simultaneous command application: The solenoid valves of a unit must apply the received command simultaneously in one cycle time.
- Transmission of the response(s) to the command: The solenoid valve control unit 113 of one unit must certainly transmit a response(s) to the factory control unit 200 based on the received parameters. A diversity technique (e.g., HARQ retransmissions) may be applied to the responses. For example, HARQ retransmission may be performed when one solenoid valve control unit 113 receives a certain HARQ NACK.

In order to obtain the transmission and response of periodic commands within the cycle time, a scheduling configuration is needed to provide radio resources for the transmission of periodic commands from the factory control unit 200 and related responses from the solenoid valve control unit 113 within the cycle time described above.

In the wireless access network, radio resource scheduling may be performed by the factory control unit 200. However, the commands are transmitted periodically from the factory network 220. The radio resource assignment of the factory control unit 200 for downlink command transmission and uplink response needs to be well coordinated with the factory network 220 to meet the cycle time requirements described above. To this end, the factory control unit 200 should configure the solenoid valve control unit 113 appropriately, provide radio resources to the solenoid valve control unit 113, and consider information to assist in supporting periodic commands and/or responses from the solenoid valve control unit 113.

To this end, the factory control unit 200 needs to know the time to start the transmission. Information related to the start time of transmission should be known to the factory control unit 200. In some examples, one command may be included in the transmission. These commands are transmitted from the factory network 220. Further, the factory control unit 200 needs to know when to start the reception. Information related to the reception start time is known to the factory control unit 200. In some examples, the reception may include a response to the command. In some examples, a response is transmitted from one solenoid valve control 113 to the factory control unit 200.

In some examples, the information described above will help the factory control unit 200 to determine when to initiate a downlink transmission to the solenoid valve control 113 to provide the solenoid valve control unit 113 with a configuration for the downlink transmission. For example, the activation time and/or start offset may be used to inform the solenoid valve control unit 113 of the time to start receiving downlink. When some response to the downlink transmission (For example, information, status report, acknowledgment or negative acknowledgment of the solenoid valve control unit 113) is needed, the information also may assist the factory control unit in scheduling uplink transmissions for responses (e.g., time, message size, and content) and help provide configuration for uplink transmission to solenoid valve control unit 113. For example, the activation time and/or start offset may be used to inform the solenoid valve control unit 113 of the time to start the uplink transmission.

The embodiment of the present disclosure also provides a control processing method performed in the factory control unit 200. The factory control unit 200 receives information on the time to perform periodic transmissions. The factory control unit 200 may also receive information on the time to perform periodic receptions. Based on this information, the factory control unit 200 provides the solenoid valve control unit 113 with a configuration indicating periodic downlink resource assignment and periodic uplink resource assignment. The periodic downlink resource assignment and the periodic uplink resource assignment may be provided together in the same configuration or separately in different configurations.

The activation time and/or start offset may be expressed as a hyper frame number, a frame number, a subframe number, or any combination thereof. Alternatively, the activation time and/or start offset may be expressed as days, hours, minutes, seconds, milliseconds, microseconds, or any combination thereof. Such downlink reception and/or uplink transmission may be semi-persistent, such as semi-persistent scheduling (SPS), and the activation time and/or start offsetmay be used to indicate when the downlink and/or uplink SPS starts.

In addition, the factory control unit 200 appropriately configures the solenoid valve control unit 113 and provides radio resources to the solenoid valve control unit 113 to consider additional information from the factory network 220 to the factory control unit 200, which helps support periodic command. Additional information from the factory control unit 200 to the factory network 220 may also be considered. The information may indicate cycle time limits and also allow the solenoid valve control 113 to determine which solenoid valve control unit 113 belongs to the same group with the same group ID so that the factory control unit 200 reserves resources for the same group for periodic transmission and may help to transmit the command mentioned above at the right time.

To handle the same command transmitted to one unit, which may have more than one solenoid valve control unit 113,multicast transmission is used for the same downlink command. When multicast is used, physical downlink control channel (PDCCH) resources and scheduling complexity may be reduced.

Lower layer signaling (e.g., PDCCH signaling) is not used for semi-persistent scheduling (SPS) activation or deactivation. Instead, dedicated radio resource control (RRC) signaling indicates the time to start SPS transmission/reception. All the solenoid valve control units 113 in one unit may equally understand when to start SPS transmission/reception and prevent additional power consumption of the solenoid valve control unit 113 due to the initial SPS activation.

A configuration that is required for the solenoid valve control unit 113 and can be configured exclusively for the solenoid valve control unit 113 may include, for example, (1) a group radio network temporary identifier (RNTI), (2) downlink and uplink SPS interval, (3) time to start downlink reception, (4) time to stop downlink reception, (5) time to start uplink transmission, (6) time to stop uplink transmission and (7) resource allocation for downlink reception and uplink transmission.

Further, the information known by the factory control unit 200 may include (a) the solenoid valve control unit 113 of one unit receiving a command, (b) the arrival interval time of the commands, (c) the expression of the cycle time limitation, (d) time to start command transmission and (e) command size/response size.

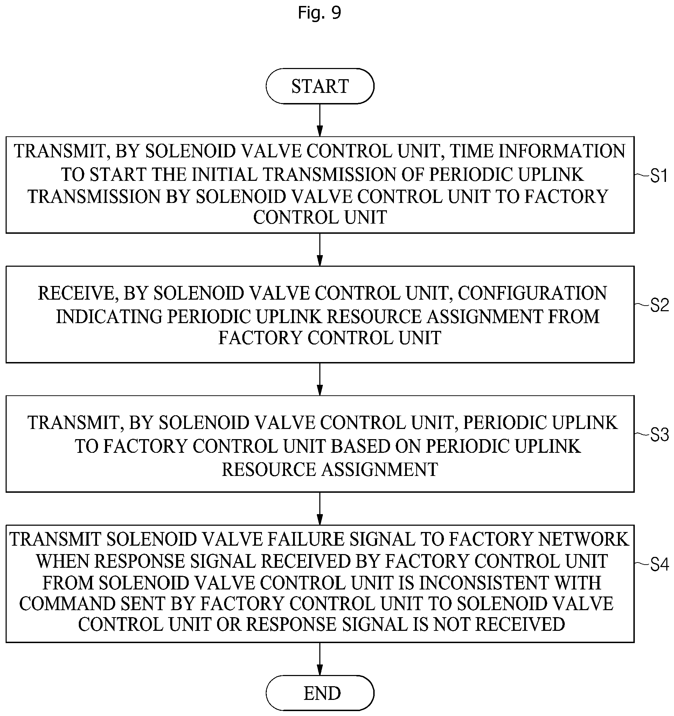

FIG. 9 is a flowchart illustrating an operating method of an industrial rechargeable wireless solenoid valve system 100, according to an embodiment of the present disclosure.

First, the solenoid valve control unit 113 transmits time information for starting the periodic uplink transmission by the solenoid valve control unit 113 to the factory control unit 200 (S1). That is, before the factory control unit 200 receives the configuration from the solenoid valve control unit 113, the solenoid valve control unit 113 transmits "information indicating the time at which the initial transmission of the periodic uplink transmission by the solenoid valve control unit 113 starts" to the factory control unit 200. In other words, in a factory automation system, time information for starting the initial uplink transmission is provided from the solenoid valve control unit 113 to the factory control unit 200 before the solenoid valve control unit 113 starts the uplink transmission to meet the cycle time required so that the factory control unit 200 considers this and configures the uplink resource appropriately. This method is different from the method of reconfiguring an already-active uplink SPS.

In other words, the industrial rechargeable wireless solenoid valve system 100, according to the present disclosure, directly provides "the time to start the initial transmission of the periodic uplink transmission by the solenoid valve control unit 113" and then sets the configuration. Meanwhile, in some examples, the information may include an interval of uplink transmission and the message size of uplink transmission.

Subsequently, the solenoid valve control unit 113 receives a configuration indicating periodic uplink resource allocation from the factory control unit 200 (S2).

Further, the solenoid valve control unit 113 transmits the periodic uplink to the factory control unit 200 based on the periodic uplink resource allocation (S3). Meanwhile, the factory control unit 200 transmits the solenoid valve failure signal to the factory network 220 when the response signal received by the factory control unit 200 from the solenoid valve control unit 113 is inconsistent with the command transmitted to the solenoid valve control unit 113 or no response signal is received (S4). Therefore, the manager of the industrial rechargeable wireless solenoid valve system 100 may easily determine which part of multiple units, and/or multiple solenoid valves is failing through the monitoring control unit 230, the network security unit 240 and/or the network management unit 250.

Further, in this way, the present disclosure provides the time information of the initial starting uplink transmission to the wireless communication unit 210 of the factory control unit 200, thereby giving an industrial rechargeable wireless solenoid valve system 100 that allows the factory control unit 200 to consider this information to configure uplink resources properly.

## Claims

1. An industrial rechargeable wireless solenoid valve system comprising:
a wireless communication unit for receiving a command from the factory control unit;
a solenoid valve control unit for receiving the command from the wireless communication unit and outputting an operation signal corresponding to the command;
an output unit for receiving the operation signal from the solenoid valve control unit and driving the solenoid valve; and
a power supply unit for supplying power tothe wireless communication unit, the solenoid valve control unit, and the output unit, respectively.

2. The industrial rechargeable wireless solenoid valve system according to claim 1, wherein the solenoid valve control unit responds to a factory control unit through a wireless communication unit for an output state of the solenoid valve by the output unit.

3. The industrial rechargeable wireless solenoid valve system according to claim 1, further comprising a rechargeable battery for supplying DC power to the power supply unit, wherein the battery is charged by a solar power module or an external DC power supply device.

4. The industrial rechargeable wireless solenoid valve system according to claim 1, further comprising an external DC power supply device for supplying DC power to the power supply unit.

5. The industrial rechargeable wireless solenoid valve system according to claim 1, wherein the factory control unit and the wireless communication unit include a 2.4GHz band Wi-Fi communication module or a ZigBee communication module.

6. The industrial rechargeable wireless solenoid valve system according to claim 1, performing steps of:
transmitting, by the solenoid valve control unit, time information to start the initial transmission of periodic uplink transmission by the solenoid valve control unit to the factory control unit;
receiving, by the solenoid valve control unit, a configuration indicating periodic uplink resource assignment from the factory control unit;
transmitting, by the solenoid valve control unit, the periodic uplink to the factory control unit based on the periodic uplink resource assignment; and
transmitting a solenoid valve failure signal to a factory network when the response signal received by the factory control unit from the solenoid valve control unit is inconsistent with the command transmitted by the factory control unit to the solenoid valve control unit or the response signal is not received.
